# EUROPEAN PATENT APPLICATION

(11) **EP 2 998 746 A1**
(43) Date of publication of application: **23.03.2016**
(21) Application number: 15000592.4
(22) Date of filing: 02.03.2015
(51) Int. Cl.: G01Q 10/02

(54) **Corporate recognition for travel related services**

(30) Priority: 19.09.2014 US 201414491313
(71) Applicant: Amadeus S.A.S., 06410 Biot (FR)
(72) Inventor: Elf, Charlotte, 06560 Valbonne (FR); Thomas, Fiona, 06560 Valbonne (FR); Choubert, Luc, 06410 Biot (FR); Kokorina, Gelena, 06410 Biot (FR)
(74) Representative: Samson & Partner Patentanwälte mbB

(57) **Abstract**

Methods, systems and computer program products for processing a travel request. A travel request is received at a reservation system that identifies a travel inventory item and a passenger name record. Whether the passenger name record includes a corporate identifier is determined. If the passenger name record includes a corporate identifier, corporate value data is determined, and an availability request that includes the corporate identifier and the corporate value data is communicated to at least one inventory system associated with the at least one travel inventory item. An availability response is received that indicates a determined availability for the at least one travel inventory item, where the determined availability is based at least in part on the corporate identifier and corporate value data.

## Description

### BACKGROUND

The invention is generally related to computers and computer software, and in particular to methods, systems, and computer program products for processing travel requests, managing inventory related to travel services, and managing reservations.

Computer technology is increasingly used in the travel industry to manage and support travel reservations, as well as data associated therewith. In particular, third party reservation agents, such as travel agents, and/or customers (e.g., travelers) often utilize computer-based devices to interface with a travel reservation system, such as a Global Distribution System (GDS), to book travel arrangements and/or travel-related services for the customer. When reserving travel-related services using such reservation terminals in communication with such travel reservation systems, a travel agent and/or customer may initiate a reservation session between a client device and the travel reservation system to book one or more travel inventory items corresponding to the travel-related services (e.g., flights, hotels, rail transportation, dining reservations, etc.) for the customer during the reservation session. In turn, the travel reservation system may initiate an inventory session with one or more inventory systems that manage inventory for one or more travel merchants and/or travel service providers.

Because computer technology is utilized to increasingly manage and support travel reservations, a continuing need exists in the art for improved computer-based travel planning and reservation systems, as well as improved methods and computer program products, for processing travel requests, managing inventory related to travel services, and managing reservations.

### SUMMARY

Embodiments of the invention generally comprise methods, systems, and computer program products for processing travel requests, managing inventory for travel services, and/or managing travel reservations. A travel request that identifies at least one travel inventory item for a passenger name record may be received at a reservation system. The reservation system may determine whether the passenger name record includes a corporate identifier. Responsive to determining that the passenger name record includes a corporate identifier, corporate value data associated with the corporate identifier may be determined, and an availability request that includes the corporate identifier and the corporate value data may be communicated to at least one inventory system associated with the at least one travel inventory item. An availability response may be received from the at least one inventory system that indicates a determined availability for the at least one travel inventory item, where the determined availability is based at least in part on the corporate identifier and the corporate value data. Furthermore, in some embodiments, additional services (e.g., seat re-assignment, boarding priority, waitlist priority, etc.) may be determined for a passenger name record and/or a traveler associated with a passenger name record based at least in part on a corporate identifier.

### BRIEF DESCRIPTION OF THE SEVERAL VIEWS OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.
FIG. 1 is a block diagram of a reservation system, one or more inventory systems, one or more client devices, and one or more departure control systems consistent with embodiments of the invention.
FIG. 2 is a block diagram of a reservation system of FIG. 1.
FIG. 3 is a block diagram of an inventory system of FIG. 1.
FIG. 4 is a block diagram of a departure control system of FIG. 1.
FIG.5 is a flowchart illustrating a sequence of operations that may be performed by the reservation system of FIGS. 1-2 to process a travel request.
FIG. 6 is an example routine in the form of a sequence diagram that may be performed by the reservation system and at least one client device.
FIG. 7 is an example graphical user interface that may be output by the client device of FIG. 1.
FIG. 8 is a flowchart illustrating a sequence of operations that may be performed by the reservation system, inventory system, and/or departure control system of FIGS. 1-4 to determine a process customer value.
FIGS. 9A-D are block diagrams that illustrate an example determination of process customer values.

### DETAILED DESCRIPTION

Embodiments of the invention provide systems, methods, and computer program products for processing travel requests, managing inventory for travel services, and/or managing travel reservations. Generally, embodiments of the invention may process travel requests, manage inventory for travel services, and/or manage travel reservations based at least in part on a corporate identifier of an associated passenger name record (PNR).

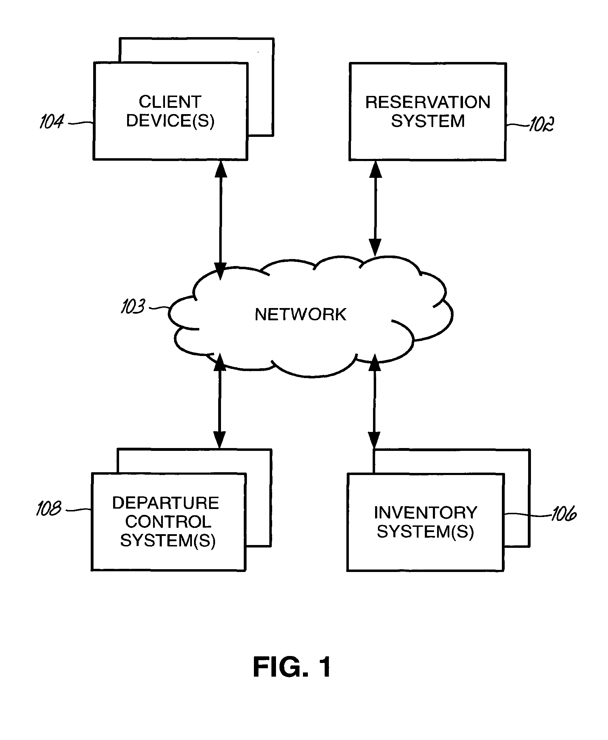

Turning now to the figures and particularly to FIG. 1, this figure provides a block diagram illustrating the one or more devices and/or systems consistent with embodiments of the invention. As shown in FIG. 1, a reservation system 102 may be implemented as one or more servers. The reservation system 102 may be connected to a communication network 103, where the communication network 103 may comprise the Internet, a local area network (LAN), a wide area network (WAN), a cellular voice/data network, one or more high speed bus connections, and/or other such types of communication networks. One or more client devices 104 may be connected to the communication network 103, such that a customer or reservation agent (e.g., travel agency or other such travel reservation service) may initialize a reservation session with the reservation system 102 to communicate a travel request and/or other such relevant data to the reservation system 102. The client device 104 may be a personal computing device, tablet computer, thin client terminal, smart phone and/or other such computing device.

One or more servers for one or more inventory systems 106 of one or more travel merchants are connected to the communication network 103. The reservation system 102 may initialize an inventory session over the communication network 103 with each inventory system 106 for which a travel inventory item is to be booked. Consistent with embodiments of the invention, a reservation agent or customer (i.e., a traveler) may interface with the reservation system 102 using the client device 104 in a reservation session to provide data for a travel request. In turn, the reservation system may interface with each inventory system 106 of each travel merchant that provides a travel inventory item associated with the travel request that generally requires an availability determination (e.g., a flight, rail ticket, hotel room, event ticket, etc.) to determine availability. As shown, one or more departure control systems 108 may be connected to the network 103. In general, a departure control system 108 includes one or more devices for processing passenger information prior to use of a travel service, such as electronic check-in kiosks, baggage handling systems, mobile boarding systems, passenger boarding devices, and/or other such devices. Generally, a departure control system 108 may receive reservation information from the reservation system 102 stored in a passenger name record (which may also be referred to as a customer product record). The departure control system 108 may update reservation information as one or more passengers of the passenger name record check-in, drop baggage, board, depart, arrive, etc. While the reservation system 102, inventory system 106, and departure control system 108 are described herein as separate entities, the embodiments of the invention are not so limited. In some embodiments, various hardware, software components, and/or sequences of operations described with respect to the reservation system 102, inventory system 106, or departure control system 108 may be implemented on the reservation system 102, inventory system 106, and/or departure control system 108. Furthermore, as will be appreciated, in some embodiments the reservation system 102, inventory system 106, and/or departure control system 108 may be components of a global distribution system (GDS).

As will be described in detail below, consistent with embodiments of the invention, an interface may be generated by the reservation system such that a user (i.e., a traveler or a travel agent) may input information at a client device 104 that may be utilized to generate a travel request that may in turn be used to determine one or more travel solutions consistent with embodiments of the invention. To determine the one or more travel solutions, the reservation system 102 interfaces with one or more inventory systems 106 to determine an availability for travel inventory items to be booked for a travel solution. In this regard, the reservation system 102 may communicate an availability request to the inventory system 106, and the inventory system 106 may determine an availability for each requested travel inventory item. An availability response may be communicated to the reservation system 102 that includes the determined availability for each travel inventory item of the availability request. Consistent with some embodiments of the invention, the inventory system may determine availability for a travel inventory item based at least in part on a corporate identifier, corporate value data, and/or one or more business rules associated with the availability request. Once availability has been determined for the one or more travel inventory items of the one or more travel solutions, the reservation system 102 may communicate a travel response to the client device 104 that identifies the travel inventory items, availability, and/or fares for each travel solution.

Moreover, consistent with some embodiments of the invention, the reservation system 104 may determine seating, re-assignment of seating, and/or generate a seat map for selection of a seat based at least in part on corporate value data. Similarly, special services (e.g., ancillary services) may be determined for a traveler of a passenger name record based at least in part on corporate value data. For example, baggage services, meal services, lounge access, extended boarding time, priority boarding, and/or other such additional services may be determined for a traveler associated with a passenger name record by the departure control system 108.

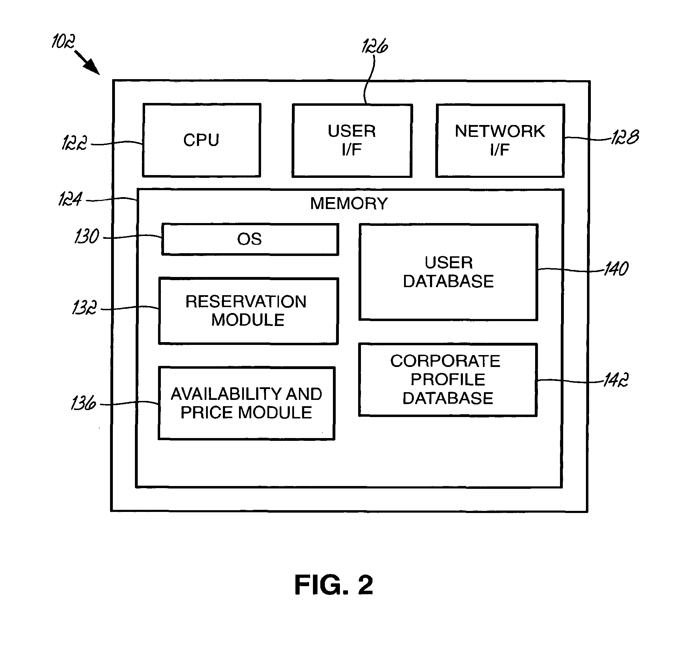

FIG. 2 provides a block diagram that illustrates the components of the one or more servers of the reservation system 102. The reservation system 102 includes at least one processor 122 including at least one hardware-based microprocessor and a memory 124 coupled to the at least one processor 122. The memory 124 may represent the random access memory (RAM) devices comprising the main storage of the reservation system 102, as well as any supplemental levels of memory, e.g., cache memories, non-volatile or backup memories (e.g., programmable or flash memories), read-only memories, etc. In addition, memory 124 may be considered to include memory storage physically located elsewhere in the travel and reservation system 102, e.g., any cache memory in a microprocessor, as well as any storage capacity used as a virtual memory, e.g., as stored on a mass storage device or on another computer coupled to the reservation system 102.

For interface with a user or operator, the reservation system 102 may include a user interface 126 incorporating one or more user input/output devices, e.g., a keyboard, a pointing device, a display, a printer, etc. Otherwise, data may be communicated to and from another computer or terminal (e.g., the client device 104, the inventory system 106) over a network interface 128 coupled to the communication network 103. The reservation system 102 also may be in communication with one or more mass storage devices, which may be, for example, internal hard disk storage devices, external hard disk storage devices, external databases, storage area network devices, etc.

The reservation system 102 typically operates under the control of an operating system 130 and executes or otherwise relies upon various computer software applications, components, programs, objects, modules, engines, data structures, etc., including for example, a reservation module 132, and an availability and price module 134. In general, the reservation module 132 may be configured to interface with one or more travel merchant systems (e.g., inventory systems 106) to reserve travel services based on received data. The availability and price module 134 may be configured to query inventory systems 106 and receive pricing and availability information for requested travel inventory items of various types of travel services (e.g., a ticket for a flight, a ticket for rail travel, etc.). Furthermore, memory 124 may include a user database 140 that stores user records. Each user record may correspond to a traveler, and the user record may store a passenger name record (PNR) associated with the traveler, identification information, user preferences, user related identifiers (e.g., frequent flyer identification number), reservation information, contact information, frequent flyer data (e.g., frequent flyer tier level, frequent flyer miles, frequent flyer priority code, etc.), and/or related information.

The memory 124 also includes a corporate profile database 142 that stores corporate records that each corresponds to a corporate and/or business entity (hereinafter referred to as a corporation) and a particular travel merchant. Each corporate record includes a corporate identifier associated with the corporation and corporate value data corresponding to the corporation for the particular travel merchant. The corporate value data may include a corporate tier level, a corporate priority code, an alliance tier level, and/or a corporate customer value. A corporate identifier may generally correspond to an alphanumeric value and be used to identify a corporate record associated with a particular corporation. A corporate tier level generally corresponds to a value of the corresponding corporation for a travel merchant. For example, according to one or more business rules, two or more possible corporate tier levels may be defined that indicate a priority and/or value, such as a gold corporate tier level, a silver corporate tier level, and/or a basic corporate tier level.

A corporate priority code generally corresponds to a value that defines a value and/or priority of a particular corporation to a travel merchant. For example, according to one or more business rules associated with a particular travel merchant, two or more corporate priority code levels may be defined, such as level 1, level 2, level 3, etc. In this example, a PNR having a corporate identifier associated with a corporation having a corporate priority code of level 1 may have higher priority on a waitlist than a PNR having a corporate identifier associated with a corporation having a corporate priority code of level 2.

A corporate customer value generally corresponds to a value that a particular corporation (often referred to as a corporate account) brings to a particular travel merchant, where such corporate customer value may be based at least in part on a profit (e.g., short term profit, average profit, etc.) of the particular travel merchant associated with the particular corporation, a volume of bookings for the particular travel merchant associated with the particular corporation, a strategic importance (e.g., long-term projections), and/or other such considerations. Generally, corporate customer values may be used to further differentiate priority and/or value between corporations for travel booking and/or travel related services.

In general, the reservation system 102 may manage travel reservations for one or more travel merchants. As such, a corporate record for a particular corporation and a particular travel merchant may include a corporate identifier for the particular travel merchant associated with the reservation system that supports corporate recognition processing for travel reservations and related services. Moreover, the corporate record may store a corporate tier level, a corporate priority code, and/or a corporate customer value for a particular corporation for the particular travel merchant associated with the reservation system 102.

Moreover, various applications, components, programs, objects, modules, engines etc. may also execute on one or more processors in another computer coupled to the reservation system 102 via the communication network 103, e.g., in a distributed or client-server computing environment, whereby the processing required to implement the functions of a computer program may be allocated to multiple computers over a network. For example, some of the functionality described herein as being incorporated into a reservation system 102 and/or modules of the reservation system 102 may be implemented in one or more servers. Consistent with embodiments of the invention, the modules 132, 134 and/or other such modules/applications may be executing on one or more servers of the reservation system 102, and the modules 132, 134 may cause the processor 122 of the reservation system 102 to perform operations consistent with embodiments of the invention.

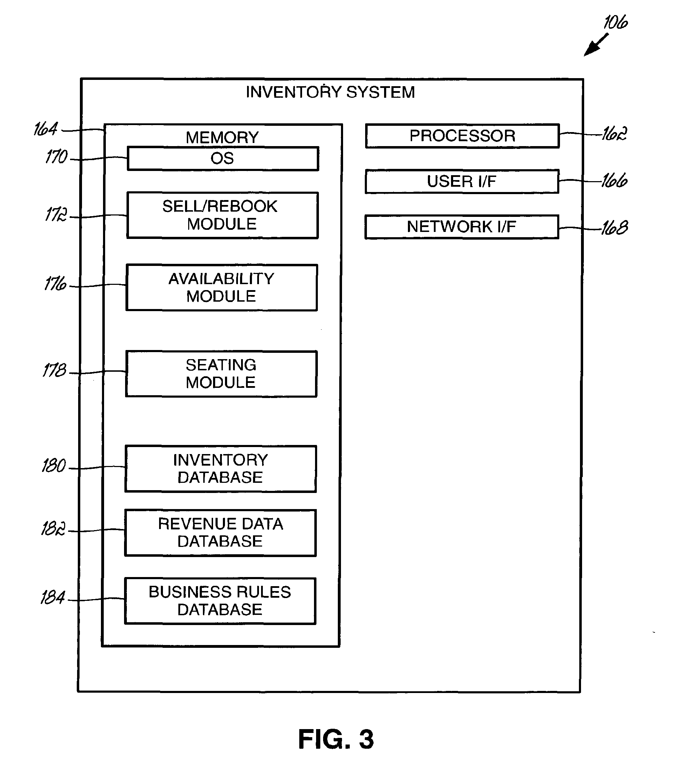

Referring to FIG. 3, this figure provides a block diagram that illustrates the components of the one or more servers of an inventory system 106 consistent with embodiments of the invention. The inventory system 106 includes at least one processor 162 including at least one hardware-based microprocessor and a memory 164 coupled to the at least one processor 162. The memory 164 may represent the random access memory (RAM) devices comprising the main storage of the inventory system 106, as well as any supplemental levels of memory, e.g., cache memories, non-volatile or backup memories (e.g., programmable or flash memories), read-only memories, etc. In addition, memory 164 may be considered to include memory storage physically located elsewhere in the inventory system 106, e.g., any cache memory in a microprocessor, as well as any storage capacity used as a virtual memory, e.g., as stored on a mass storage device or on another computer coupled to the inventory system 106 via the communication network 103, such as a memory of the reservation system 102.

For interface with a user or operator, the inventory system 106 may include a user interface 166 incorporating one or more user input/output devices, e.g., a keyboard, a pointing device, a display, a printer, etc. Otherwise, input may be retrieved via another computer or terminal (e.g., the client device 104 and/or the reservation system 102) over a network interface 168 coupled to the communication network 103. The inventory system 106 also may be in communication with one or more mass storage devices, which may be, for example, internal hard disk storage devices, external hard disk storage devices, external databases, storage area network devices, etc.

The inventory system 106 typically operates under the control of an operating system 170 and executes or otherwise relies upon various computer software applications, components, programs, objects, modules, data structures, etc., including for example, a sell/rebook module 172, an availability module 176, and/or a seating module 178. Furthermore, the memory 164 of the inventory system 106 may generally store one or more databases including for example, an inventory database 180 that stores data associated with one or more travel inventory items managed by the inventory system 106, a revenue data database 182 that stores revenue data for one or more travel inventory items, and/or a business rules database 184 that stores business rules/system parameters for the inventory system of the associated travel merchant. Each database 180-184 may include data and supporting data structures that store and organize the data. In particular, each database 180-184 may be arranged with any database organization and/or structure including, but not limited to, a relational database, a hierarchical database, a network database, and/or combinations thereof. A database management system in the form of a computer software application executing as instructions on a processing unit of the inventory system 106 is used to access the information or data stored in records of the databases 180-184 in response to a query.

In particular, the inventory database 180 generally stores inventory data corresponding to travel inventory items of a travel merchant that the inventory system 106 is configured to manage. The inventory data that may be stored in the inventory database 180 may include available travel inventory items, uncommitted booked travel inventory items, committed booked travel inventory items, a load factor for a group/type of travel inventory items (e.g., the number of booked seats on a flight-date for a cabin compared to the total number of seats on the flight-date for the cabin), time to departure for each type of travel inventory item, and/or other such information.

Consistent with embodiments of the invention the modules 172, 176, 178 and/or other such modules/applications may be executing on the inventory system 106, and the modules 172, 176, 178 may cause the processor 162 to perform operations consistent with embodiments of the invention. The sell/rebook module 172 may be configured to analyze a received availability request, and determine a travel inventory item for the inventory request. The availability module 176 may query the inventory database 180 to determine travel inventory item availability for received availability requests.

In general, the availability module 176 may calculate travel inventory item availability based at least in part on data stored in the inventory database 180. Furthermore, in some embodiments, the availability module 176 may determine travel inventory item availability based at least in part on corporate value data and/or a corporate identifier received in a corresponding availability request. In these embodiments, the availability module 176 may determine travel inventory item availability based on the received corporate value data, corporate identifier, and/or one or more business rules stored in the business rules database 184.

In general, the business rules database 184 may store one or more business rules that correspond to corporate value data and define how the sell/rebook module 172 and/or the availability module 176 process availability requests that include corporate value data. For example, a business rule may identify a particular corporate identifier for which an availability determination for travel inventory items may result in more availability and/or a lower yield. Generally, business rules may be defined by a travel merchant via an interface (e.g., a user interface generating a graphical user interface, a network interface supporting a web-based graphical user interface, etc.) that may interface with the reservation system 102 (as well as the inventory system 106 and/or departure control system 108). Through the interface, a travel merchant may define a business rule by specifying criteria required for the business rule to be applicable and conditions and/or specifications to apply if the criteria are met.

The seating module 178 may be configured to determine seats and/or generate a seating map for a travel inventory item of the inventory system 106. Generally, the determined seats and/or seating map may be based at least in part on corporate value data and/or one or more business rules. Furthermore, the seating module 178 may be configured to re-assign seats based at least in part on corporate value data and/or one or more business rules.

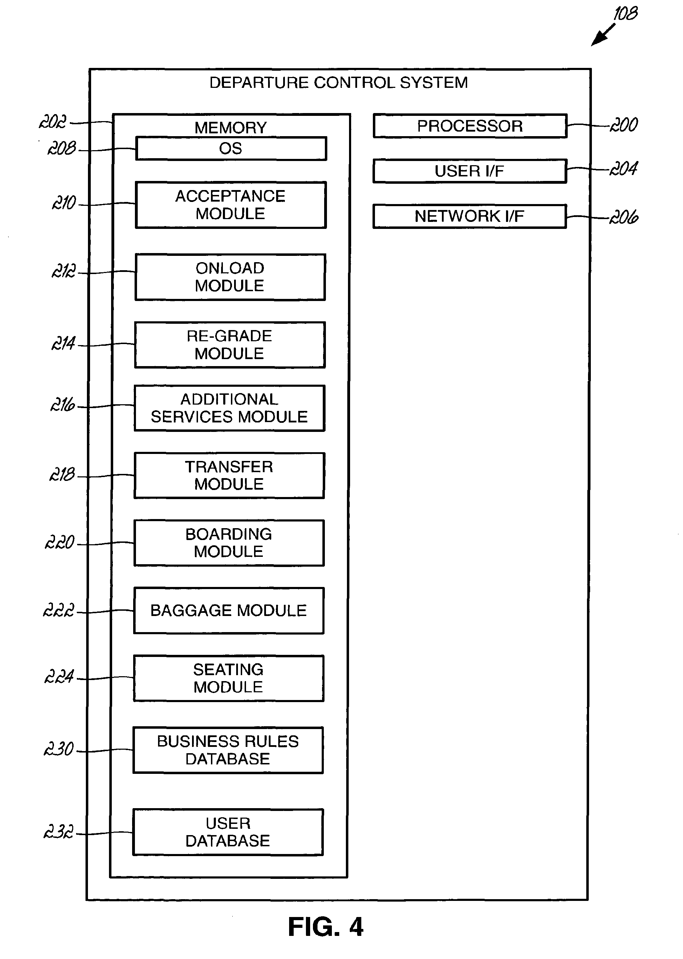

FIG. 4 provides a block diagram that illustrates the components of the departure control system 108 consistent with embodiments of the invention. The departure control system 108 includes at least one processor 200 including at least one hardware-based microprocessor and a memory 202 coupled to the at least one processor 200. The memory 202 may represent the random access memory (RAM) devices comprising the main storage of the departure control system 108, as well as any supplemental levels of memory, e.g., cache memories, non-volatile or backup memories (e.g., programmable or flash memories), read-only memories, etc. In addition, memory 202 may be considered to include memory storage physically located elsewhere in the departure control system 108, e.g., any cache memory in a microprocessor, as well as any storage capacity used as a virtual memory, e.g., as stored on a mass storage device or on another computer coupled to the departure control system 108 via the communication network 103, such as a memory of the reservation system 102.

For interface with a user or operator, the departure control system 108 may include a user interface 204 incorporating one or more user input/output devices, e.g., a keyboard, a pointing device, a display, a printer, etc. Otherwise, input may be retrieved via another computer or terminal (e.g., the client device 104 and/or the reservation system 102) over a network interface 206 coupled to the communication network 103. The departure control system 108 also may be in communication with one or more mass storage devices, which may be, for example, internal hard disk storage devices, external hard disk storage devices, external databases, storage area network devices, etc.

The departure control system 108 typically operates under the control of an operating system 208 and executes or otherwise relies upon various computer software applications, components, programs, objects, modules, data structures, etc., including for example, an acceptance module 210, an onload module 212, a re-grade module 214, an additional service module 216, a transfer module 218, a boarding module 220, a baggage module 222, and/or a seating module 224. Furthermore, the memory 202 of the inventory system 106 may generally store one or more databases including for example, a business rules database 230 and/or a user database 232. The business rules database 230 generally stores business rules/system parameters for the departure control system 108. The user database 232 generally stores user records, where each user record corresponds to a traveler. Each user record may include one or more passenger name records, traveler information (e.g., a frequent flyer identification, a corporate identifier, etc.), and/or other such information.

Each database 230, 232 may include data and supporting data structures that store and organize the data. In particular, each database 230, 232 may be arranged with any database organization and/or structure including, but not limited to, a relational database, a hierarchical database, a network database, and/or combinations thereof. A database management system in the form of a computer software application executing as instructions on a processing unit of the inventory system 106 is used to access the information or data stored in records of the databases 230, 232 in response to a query.

Consistent with embodiments of the invention the modules 210-224 and/or other such modules/applications may be executing on the departure control system 108, and the modules 210-224 may cause the processor 200 to perform operations consistent with embodiments of the invention. Generally, the acceptance module 210 may be configured to rank customers (i.e., passengers) for a flight based on an airline's business rules associated with onloading/acceptance. Aircraft capacity for the flight may be considered a cutoff, and the acceptance module 210 may determine customers of the highest value to accept for the flight, while lower value customers may be placed on standby. In this regard, the acceptance module 210 may select customers for acceptance based at least in part on user attributes, such as frequent flyer tier level, frequent flyer customer value, corporate tier level, corporate priority code, and/or corporate customer value. In addition, the acceptance module 210 may be configured to determine an amount of time before departure of a flight to open/close customer acceptance, check-in, and opening a boarding gate for the flight. In this regard, the acceptance module 210 may determine each amount of time based at least in part on attributes of the customer, including for example, frequent flyer tier level, frequent flyer customer value, travel alliance tier level, corporate tier level, corporate priority code, and/or corporate customer value. Generally, customers having a higher value based on such attributes for the airline according to one or more business rules of the airline may be determined to have a larger amount of time to check-in, be accepted for a flight, board the flight, etc.

The onload module 212 may be configured to select customers from standby at flight closure time. The onload module 212 may select customers from standby based at least in part on one or more business rules of the airline. Consistent with embodiments of the invention, customers may be selected from standby based at least in part on customer attributes, such as frequent flyer tier level, frequent flyer customer value, corporate tier level, corporate priority code, and/or corporate customer value.

The re-grade module 214 may be configured to select customers/passengers for upgrade on a flight or other such travel service. Consistent with some embodiments of the invention, selecting customers for upgrade may be based at least in part on customer attributes, such as frequent flyer tier level, frequent flyer customer value, corporate tier level, corporate priority code, and/or corporate customer value.

The additional services module 216 may be configured to determine additional services to be offered to a customer (e.g., lounge access, onboard services, priority seating, order of display in customer lists, etc.). Consistent with some embodiments of the invention, determining additional services to be offered for a particular customer may be based at least in part on customer attributes, such as frequent flyer tier level, frequent flyer customer value, corporate tier level, corporate priority code, and/or corporate customer value.

The transfer module 218 may be configured to assign customers to a different flight (such as when a flight is cancelled). When transferring customers, the transfer module 218 may select high value customers for confirmation on earlier flights, more convenient flights (e.g., a direct flight as compared to a flight with stops), etc. Consistent with some embodiments of the invention, transferring customers to different flights may be based at least in part on customer attributes, such as frequent flyer tier level, frequent flyer customer value, corporate tier level, corporate priority code, and/or corporate customer value.

The boarding module 220 may be configured to control generation and/or printing of boarding passes. Consistent with some embodiments of the invention, determination of a boarding priority group for a generated boarding pass may be based at least in part on customer attributes, such as frequent flyer tier level, frequent flyer customer value, corporate tier level, corporate priority code, and/or corporate customer value. Moreover, consistent with some embodiments of the invention, a corporate identifier, corporate tier level, and/or a corporate priority code may be included in the generated and/or printed boarding pass.

The baggage module 222 may be configured to determine a baggage priority for baggage of customers. Consistent with some embodiments of the invention, a particular customer's baggage may be determined to have a higher baggage priority relative to the baggage of other customers based at least in part on customer attributes, such as frequent flyer tier level, frequent flyer customer value, corporate tier level, corporate priority code, and/or corporate customer value. Similarly, the baggage module 222 may be configured to determine a baggage allowance based at least in part on customer attributes, including frequent flyer tier level, frequent flyer customer value, corporate tier level, corporate priority code, and/or corporate customer value.

The seating module 224 may be configured to determine an order in which customers of a flight may be assigned seats for the flight. Furthermore, the seating module 224 may be configured to reassign seats for the flight and/or a seat refresh after a change of aircraft or configuration of the aircraft. Consistent with embodiments of the invention, customer seat assignment and/or re-assignment may be based at least in part on customer attributes, such as frequent flyer tier level, frequent flyer customer value, corporate tier level, corporate priority code, and/or corporate customer value.

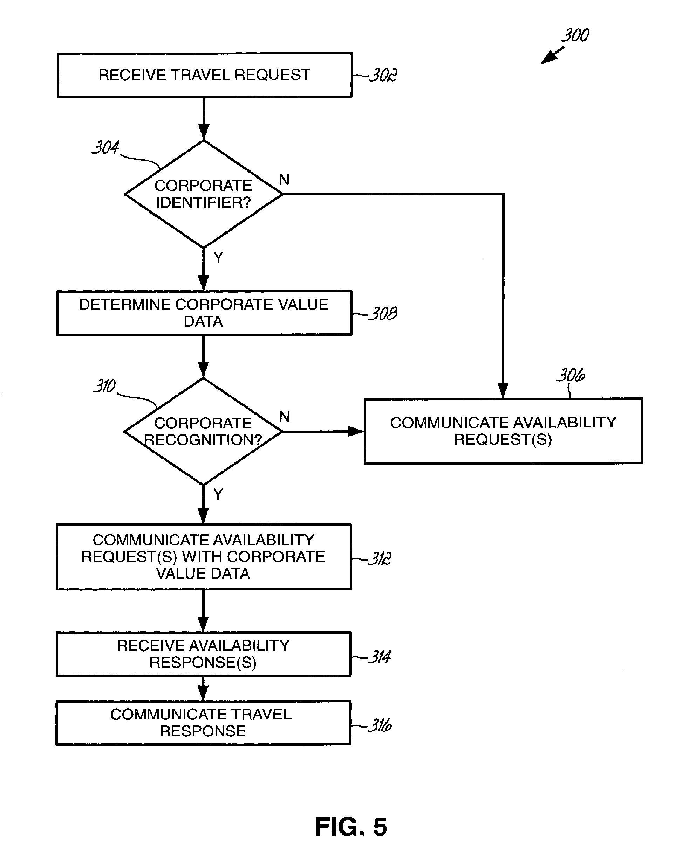

Turning now to FIG. 5, this figure provides a flowchart 300 that illustrates a sequence of operations that may be performed by a reservation system 102 consistent with embodiments of the invention to process a travel request. As shown, the reservation system 102 receives a travel request that identifies at least one travel inventory item and a passenger name record (block 302) from a client device 104. The reservation system 102 determines whether the passenger name record includes a corporate identifier (block 304). In response to determining that the passenger name record does not include a corporate identifier ("N" branch of block 304), the reservation system 102 communicates one or more availability requests to each inventory system associated with a travel inventory item identified by the travel request (block 306).

In response to determining that the passenger name record includes a corporate identifier ("Y" branch of block 304), the reservation system 102 determines corporate value data corresponding to the corporate identifier (block 308). Consistent with embodiments of the invention, the reservation system may query the corporate profile database 142 to determine the corporate value data corresponding to the corporate identifier. As discussed, the corporate value data may include a corporate tier level, a corporate priority code, and/or a corporate customer value. As discussed, the travel request may identify travel inventory items that are associated with different travel merchants such that the reservation system 102 may communicate an availability request to inventory systems associated with the different travel merchants. Moreover, in some embodiments, one or more travel merchants associated with travel inventory items of the travel request may not support corporate recognition availability determinations. Therefore, in some embodiments, the reservation system 102 may determine whether each inventory system 106 (by extension the travel merchant) associated with a travel inventory item supports corporate recognition (block 310). In these embodiments, for each inventory system 106 of a travel merchant that does not support corporate recognition ("N" branch of block 310), the reservation system 102 may communicate an availability request that does not include corporate value data (block 306).

For each inventory system 106 of a travel merchant associated with a travel inventory item that does support corporate recognition ("Y" branch of block 310), the reservation system 102 communicates an availability request that includes the corporate value data to each inventory system associated with a travel inventory item identified in the travel request (block 312). For each communicated availability request, the reservation system 102 receives an availability response (block 314) that indicates an availability for each travel inventory item of the travel request. Based at least in part on the travel inventory items and the indicated availabilities, the reservation system 102 communicates a travel response that includes one or more travel solutions to the client device 104 (block 316).

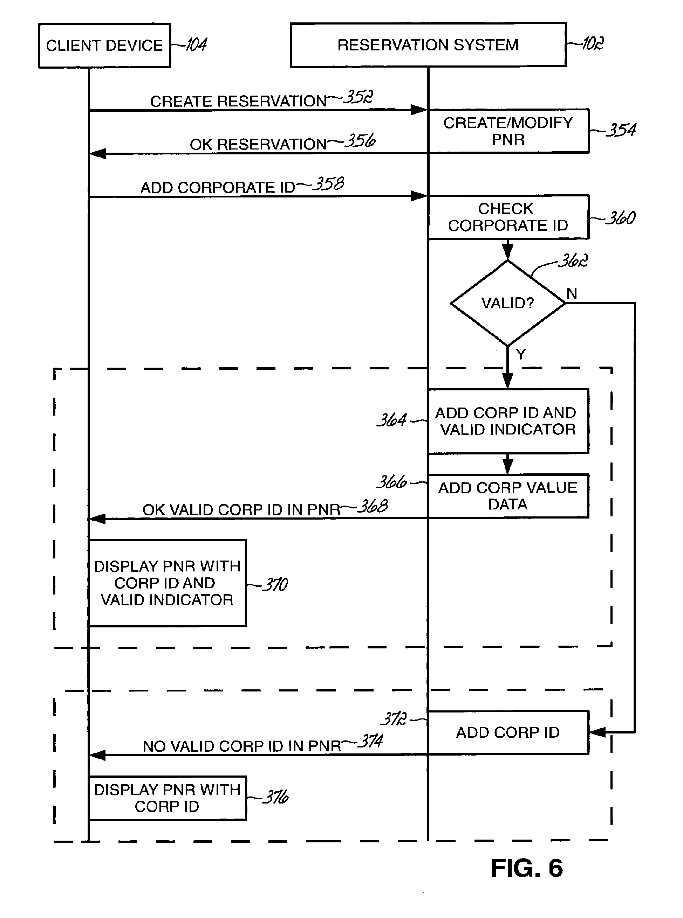

FIG. 6 provides a routine 350 that illustrates a sequence of operations that may be performed by the reservation system 102 and/or client device 104 consistent with some embodiments of the invention to add and/or verify a corporate identifier for a passenger name record. As shown, the client device 104 may communicate a create reservation request to the reservation system 102 (block 352). The reservation system creates/modifies a passenger name record associated with the create reservation request (block 354). Generally, the reservation system 102 may modify an existing passenger name record to add reservation information included in the create reservation request, or the reservation system 102 may create a new passenger name record based on reservation information of the create reservation request. After creation/modification of the passenger name record, the reservation system 102 communicates a reservation creation confirmation to the client device 104 (block 356). The client device 104 communicates a corporate identifier associated with the reservation to be added to the passenger name record (block 358). In response to receiving the corporate identifier, the reservation system 102 validates or checks the corporate identifier (block 360). The reservation system 102 may check the received corporate identifier by checking the corporate profile database 142.

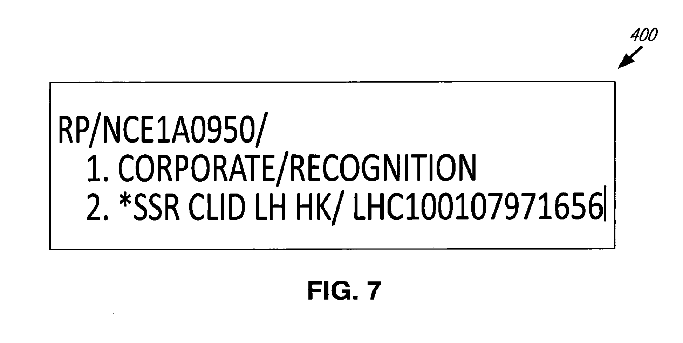

In response to determining that the corporate identifier is valid ("Y" branch of block 362), the reservation system 102 adds the corporate identifier to the passenger name record; in addition, the reservation system 102 adds an indicator to the corporate identifier in the passenger name record that indicates that the corporate identifier is valid (block 364). In general, validity of the corporate identifier indicates that the one or more travel merchants associated with the passenger name record support corporate recognition and/or that the corporate identifier is matched to a corresponding corporate record. The reservation system 102 adds corporate value data associated with the valid corporate identifier to the passenger name record from the corporate profile database 142 (block 366). The reservation system 102 communicates a confirmation of the passenger name record including the corporate identifier to the client device (block 368). At the client device 104, the passenger name record including the corporate identifier and valid indicator may be output/displayed for a user of the client device 104 (block 370).FIG. 7 provides an example output of a graphical user interface 400 that may be displayed for a user of the client device 104 in response to adding a valid corporate identifier to a passenger name record. In this example, the corporate identifier is indicated as valid with a special asterisk character (i.e.,'*').

In response to determining that the corporate identifier is not valid ("N" branch of block 362), the reservation system 102 adds the corporate identifier to the passenger name record (block 372). As discussed, a corporate identifier may not be valid for a travel merchant if the travel merchant does not support corporate recognition and/or if the corporate identifier does not match a corresponding corporate record. The reservation system 102 communicates a message that indicates that the corporate identifier was not valid and the passenger name record including the invalid corporate identifier (block 374). At the client device 104, the passenger name record including the invalid corporate identifier may be output/displayed for a user of the client device 104 (block 376).

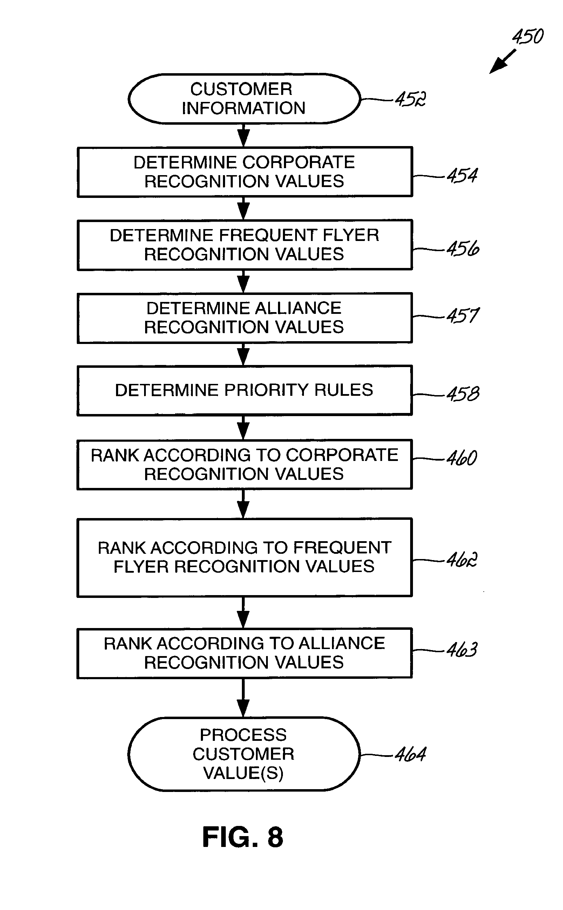

FIG. 8 provides a flowchart 450 that illustrates a sequence of operations that may be performed by the reservation system 102, the inventory system 106, and/or the departure control system to evaluate one or more customers (e.g., potential travelers or confirmed travelers) according to one or more criteria defined by one or more business rules for a given process associated with the respective system 102, 106, 108. As shown, customer information may be input (block 452). In general, the customer information may include data from an associated passenger name record, such as a frequent flyer identifier and/or a corporate identifier. Corporate recognition values from corporate value data associated with each customer are determined (block 454). Generally, the corporate values may be a corporate tier level, a corporate priority code, and/or a corporate customer value. Similarly, frequent flyer recognition values may be determined for each customer (block 456). In general, the frequent flyer recognition values may be a frequent flyer identifier, a frequent flyer tier level, a frequent flyer priority code, frequent flyer miles information, and/or other such information. In some embodiments, alliance recognition values may be determined for each customer (block 457). An alliance may refer to a partnership of travel merchants/providers that may offer combined and/or related travel services. In general, the alliance recognition values may be an alliance customer identifier, an alliance tier level, an alliance priority code, alliance reservation information, and/or other such information regarding travel services provided by the alliance that the customer has reserved and/or used.

One or more business rules defined by the associated travel merchant corresponding to priority (i.e., priority rules) may be determined from a business rules database (block 458). Based on the priority rules, the customers may be relatively ranked based on their respective corporate recognition values (block 460). The ranking of customers based on the corporate recognition values may be further refined based at least in part on frequent flyer recognition values (block 462). In addition, the ranking of customers based on the corporate recognition values and the frequent flyer recognition values may be further refined based on alliance recognition values (block 463). As such, based on the one or more rankings, a process customer value may be determined for each customer (block 464). While ranking based on corporate recognition values, frequent flyer recognition values, and/or alliance recognition values are illustrated as sequential, it should be appreciated that embodiments of the invention may perform such rankings concurrently and/or in reverse order. Generally, the process customer value for each customer may be used by the reservation system 102, inventory system 106, and/or departure control system 108 to prioritize customers relative to other customers. For example, the departure control system 108 may select one or more customers to be confirmed from standby based at least in part on the process customer value. Similarly, the inventory system 106 may determine one or more customers to be cleared from a waitlist based at least in part on the process customer value. As another example, the reservation system 102 may select one or more customers for an additional service based at least in part on the process customer value.

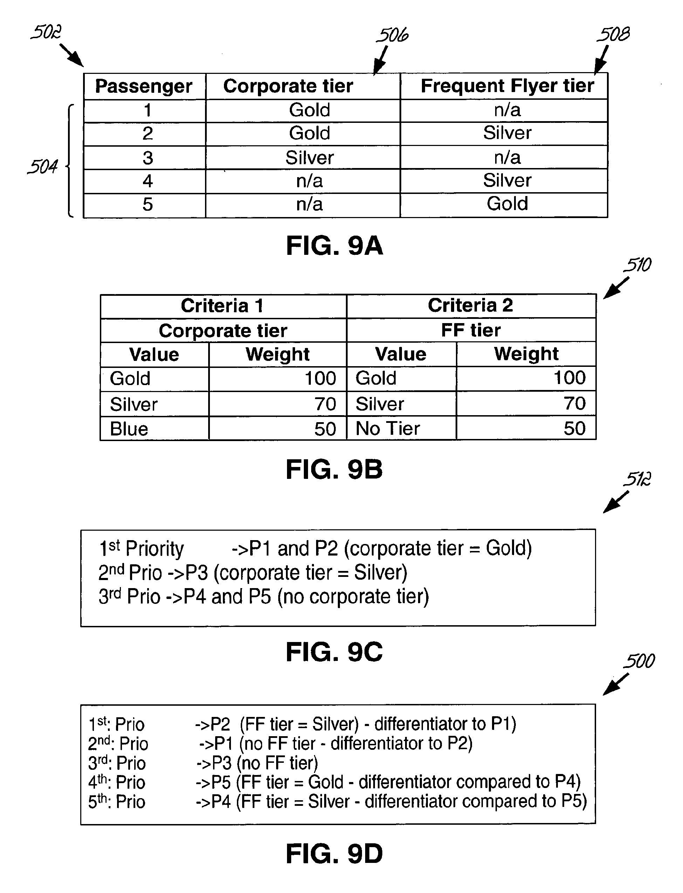

FIGS. 9A-D illustrate an example determination of relative process customer values 500. As shown in FIG. 9A, example customer information 502 for five passengers 504 (also labeled as 'P1', 'P2', 'P3', 'P4', 'P5') including corporate recognition values 506 and frequent flyer recognition values 508 may be processed according to example priority rules 510 of FIG. 9B. As shown, the priority rules 510 indicate that a corporate tier level of 'Gold' is a higher priority (i.e., 'Weight 100') than a corporate tier level of 'Silver' ('Weight 70'), which is in turn a higher priority than corporate tier level 'Blue' ('Weight 50'). Similarly, the priority rules 510 indicate that a frequent flyer tier level of 'Gold' is a higher priority ('Weight 100') than a frequent flyer tier level of 'Silver' ('Weight 70'), which is in turn a higher priority level than a frequent flyer tier level of 'Blue' ('Weight 50').

Based on the priority rules 510 associated with the corporate recognition values 506, the passengers 504 may be ranked according to a corporate priority 512 shown in FIG. 9C. As shown, passengers 'P1' and 'P2' are first priority with the corporate tier level 'Gold'; passenger 'P3' is second priority with a corporate tier level of 'Silver'; and passengers 'P4' and 'P5' are third priority because they do not have a corporate tier level. Based on the priority rules associated with the frequent flyer recognition values 510, the corporate priority 512 may be further refined to determine the customer process values 500 shown in FIG. 9D. As shown, passenger 'P2' has a first priority with a 'Silver' frequent flyer tier level; passenger 'P1' has a second priority because 'P1' is not associated with a frequent flyer tier level; passenger 'P3' has a third priority because 'P3' is not associated with a frequent flyer tier level; passenger 'P5' has a fourth priority because 'P5' has a 'Gold' frequent flyer tier level; and passenger 'P4' has a fifth priority because 'P4' has a 'Silver' frequent flyer priority level.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

The program code embodied in any of the applications/modules described herein is capable of being individually or collectively distributed as a program product in a variety of different forms. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

These computer program instructions may also be stored in a computer readable medium that can direct a computer, other types of programmable data processing apparatus, or other devices to function in a particular manner, such that the instructions stored in the computer readable medium produce an article of manufacture including instructions that implement the function/act specified in the block or blocks of the flowchart and/or block diagram.

The computer program instructions may also be loaded onto a computer, other programmable data processing apparatus, or another device to cause a series of computations to be performed on the computer, the other processing apparatus, or the other device to produce a computer implemented process such that the executed instructions provide one or more processes for implementing the functions/acts specified in the flowchart and/or block diagram block or blocks.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of', or variants thereof are used in either the detailed description or the claims, such terms are intended to be inclusive in a manner similar to the term "comprising."

While all of the present invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method for processing a travel request, the method comprising:
receiving a travel request at a reservation system that identifies at least one travel inventory item and a passenger name record;
determining, with at least one processor of the reservation system, whether the passenger name record includes a corporate identifier; and
in response to determining that the passenger name record includes a corporate identifier:
determining, with the at least one processor, corporate value data associated with the corporate identifier, and
communicating an availability request that includes the corporate identifier and the corporate value data to at least one inventory system associated with the at least one travel inventory item; and
receiving an availability response from the at least one inventory system that indicates a determined availability for the at least one travel inventory item,
wherein the determined availability is based at least in part on the corporate identifier and the corporate value data.

2. The method of claim 1, further comprising:
receiving a request to add the corporate identifier to the passenger name record;
determining whether the corporate identifier is valid for the passenger name record;
in response to determining that the corporate identifier is valid, storing the valid corporate identifier and an indicator that shows the corporate identifier has been validated in the passenger name record; and
in response to storing the valid corporate identifier in the passenger name record, synchronizing the corporate value data with the passenger name record based at least in part on the corporate identifier.

3. The method of claim 2, further comprising:
in response to determining that the corporate identifier is invalid for the passenger name record, storing the invalid corporate identifier in the passenger name record.

4. The method of claim 3, further comprising:
communicating the passenger name record including the invalid corporate identifier to a client device.

5. The method of any of claims 1 to 4, wherein the corporate value data comprises a corporate tier level, a corporate priority code, a corporate customer value, an alliance tier level, or any combination thereof.

6. The method of any of claims 1 to 5, further comprising:
determining a process customer value for a customer associated with the passenger name record based at least in part on the corporate value data.

7. The method of claim 6, wherein the process customer value is based at least part on frequent flyer data of the customer.

8. The method of claim 6 or claim 7, wherein the process customer value is based at least in part on an alliance tier level of the customer.

9. The method of any of claims 1 to 8, further comprising:
determining a plurality of travel merchants that offer the travel inventory item; and
determining each travel merchant of the plurality that supports corporate recognition,
wherein the availability request that includes the corporate identifier and the corporate value data is communicated to the inventory system of each travel merchant that supports corporate recognition.

10. The method of claim 9, wherein the corporate value data of the availability request communicated to the inventory system of each travel merchant that supports corporate recognition is based at least in part on the travel merchant.

11. The method of claim 9 or claim 10, further comprising:
communicating an availability request that does not include the corporate identifier and the corporate value data to the inventory system of each travel merchant that does not offer corporate-based travel services.

12. The method of any of claims 1 to 11, further comprising:
dynamically selecting, at a departure control system, at least one additional service for a customer of the passenger name record based at least in part on the corporate value data.

13. The method of claim 12, wherein the at least one additional service comprises extended check-in time, loading, boarding, waitlist, class upgrade, lounge access, transfer, baggage, seat assignment, display in customer lists, or any combination thereof.

14. A system comprising:
at least one processor;
a memory coupled with the at least one processor, the memory including program code stored thereon and configured to be executed by the at least one processor to cause the at least one processor to perform the method of any of claims 1 to 13.

15. A computer program product comprising:
a computer readable storage medium; and
program code stored on the computer readable storage medium and configured, upon execution, to cause at least one processor to perform the method of any of claims 1 to 13.
